# EUROPÄISCHE PATENTSCHRIFT

(11) **EP 0 919 738 B1**
(45) Veröffentlichungstag und Bekanntmachung des Hinweises auf die Patenterteilung: **26.09.2001**
(21) Anmeldenummer: 98119083.8
(22) Anmeldetag: 09.10.1998
(51) Int. Cl.: F16C 29/06, F16C 33/66

(54) **Schmiervorrichtung für ein Linearwälzlager**
Lubrication device for a linear rolling bearing
Dispositif de lubrification pour un palier à roulement linéaire

(30) Priorität: 29.11.1997 DE 19753104
(43) Veröffentlichungstag der Anmeldung: 02.06.1999
(73) Patentinhaber: INA Wälzlager Schaeffler oHG, 91072 Herzogenaurach (DE)
(72) Erfinder: Welsch, Annette, 66424 Homburg (DE); Jochum, Christian, 66424 Homburg (DE); MOSEBERG, Ralf, 66862 Kindsbach (DE)

(56) Entgegenhaltungen:
- EP-A- 0 593 239
- EP-A- 0 802 337
- DE-A- 4 141 038
- DE-A- 4 210 299
- US-A- 5 582 486

## Beschreibung

Die Erfindung betrifft eine Schmiervorrichtung für ein Linearwälzlager, welches eine Führungsschiene, einen Tragkörper und Wälzkörperumläufe enthält, deren tragende Wälzkörper zur verschieblichen Lagerung des Tragkörpers längs der Führungsschiene vorgesehen sind, wobei an den in die Verschiebungsrichtungen weisenden Stirnseiten des Tragkörpers Kopfstücke für die Umlenkung der Wälzkörper in Rücklaufkanäle befestigt sind und in wenigstens einem der Kopfstücke ein Schmierkanal mit einer eingesetzten Schmierstoffleitung angeordnet ist, die mit einer elastischen umlaufenden Dichtlippe an einer Stirnseite des Tragkörpers anliegt und mit einer Eintrittsöffnung sowie mehreren zu den Wälzkörpern im Umlenkbereich führenden Austrittsöffnungen für Schmierstoff versehen ist.

Bei Linearwälzlagern besteht die Problematik, ein gleichmäßiges Schmieren aller Wälzkörperketten unabhängig von der Einbaulage des Lagers sowohl mit Fett als auch mit Öl zu ermöglichen. Je nach Einbaulage einer solchen Linearführung können Wälzkörperketten so angeordnet sein, daß Schmierstoff entgegen der Wirkung der Schwerkraft fließen muß, um die Wälzkörper zu versorgen, während zur Versorgung weiterer Wälzkörperketten der Schmierstoff in Wirkungsrichtung der Schwerkraft fließt.

### Hintergrund der Erfindung

Eine Schmiervorrichtung der eingangs genannten Art ist aus dem Dokument DE 42 10 299 A1 bekannt. Hier wird eine flexible Schmierstoffleitung mit einer doppeltelastischen Dichtlippe verwendet, die gegenüber dem Tragkörper abdichtet, wobei sie stellenweise unterbrochen ist, so daß eine verbleibende einlippige Dichtlippe bei einem Schmierimpuls die Schmierstoffleitung öffnen kann, um die Wälzkörperketten mit Schmierstoff zu versorgen. Diese Ausführung hat den Nachteil, daß an der Schmierstoffleitung, die gleichzeitig den inneren Umlenkkörper für die Wälzkörper bildet, die Dichtlippen flexibel genug sein müssen, damit sie beim Schmierimpuls öffnen können. Dadurch wird aber der innere Umlenkkörper ebenfalls flexibel. Eine Profilierung des inneren Umlenkkörpers, die zur Verbesserung der Wälzkörperführung im Umlenkbereich beitragen würde, ist hier deshalb nicht möglich, weil die Flexibilität der Dichtlippe, die beim Schmierimpuls öffnen können muß, verringert würde.

### Zusammenfassung der Erfindung

Der Erfindung liegt die Aufgabe zugrunde, eine kostengünstige, vollkommen abgedichtete Schmierstoffleitung aufzufinden, die sowohl mit Öl als auch mit Fett eine Schmierung aller Wälzkörperketten unabhängig von der Lage der Linearführung gewährleistet. Dabei soll eine Funktionstrennung der Zuleitung des Schmierstoffs und der Umlenkung der Wälzkörper erfolgen. Es soll auch möglich sein, den inneren Umlenkkörper aus einem unflexiblen Material und eventuell zusätzlich profiliert auszuführen, was für die Führung der Wälzkörper günstig ist, während die Schmierstoffleitung aus einem flexiblen Material ausgeführt werden kann, was für die Abdichtung günstig ist.

Diese Aufgabe wird erfindungsgemäß dadurch gelöst, daß in der Schmierstoffleitung jeweils zwischen der Eintrittsöffnung und einer Austrittsöffnung eine in einer Querschnittsebene sich erstreckende und aus dieser ausschwenkbare, als zusätzliche Dichtlippe wirkende elastische Wand angeordnet ist. Auf diese Weise kann die Schmierstoffleitung, die einen halbmondförmigen Querschnitt aufweisen kann, mit ihrer umlaufenden Dichtlippe an den Tragkörper angedrückt werden, so daß sich eine komplette Abdichtung ergibt.

Die zusätzliche Dichtlippe, die den Zugang zu den Wälzkörperumläufen verschließt, ist so flexibel gestaltet, daß sie sich beim Schmierimpuls in die Öffnungsstellung verformt. Dadurch gelangt Schmierstoff durch die jeweilige zusätzliche Austrittsöffnung der Schmierstoffleitung zu den Wälzkörperumläufen. Es können beispielsweise zwei Austrittsöffnungen zur Versorgung der Wälzkörperumläufe vorgesehen sein. Dabei können die Schmierwege der einzelnen Wälzkörperumläufe gleichlang und so gestaltet sein, daß bei einem Schmierimpuls alle Umläufe geschmiert werden.

Die Schmierstoffleitung kann in den Bereichen ihrer Austrittsöffnungen von Umlenkkörpern umgeben sein, an welchen innere Laufbahnen für die umzulenkenden Wälzkörper ausgebildet sind. Dabei kann die zusätzliche Dichtlippe jeweils mit ihrem von dem Tragkörper abgewandten Randbereich in der Schmierstoffleitung befestigt sein und mit ihrem dem Tragkörper benachbarten Randbereich an der Stirnseite des Tragkörpers abschwenkbar anliegen. Es ist aber auch möglich, daß die zusätzliche Dichtlippe jeweils mit ihrem dem Tragkörper benachbarten Randbereich in der Schmierstoffleitung befestigt ist und mit ihrem von dem Tragkörper abgewandten Randbereich durch die Austrittsöffnung der Schmierstoffleitung hindurch verlaufend an dem Umlenkkörper abschwenkbar anliegt. Bei Druckbeaufschlagung mit Schmierstoff klappt die Dichtlippe jeweils aus ihrer Schließstellung heraus, so daß der Schmierstoff über die jeweilige Austrittsöffnung zu den Wälzkörperumläufen gelangt. Bei Druckabfall schließt die zusätzliche Dichtlippe die Schmierstoffleitung wieder, so daß deren Leerlaufen verhindert wird.

### Kurze Beschreibung der Zeichnungen

Ausführungsbeispiele der Erfindung sind in den Zeichnungen dargestellt und werden im folgenden näher beschrieben. Es zeigen:
- Figur 1: eine Ansicht mit teilweisem Schnitt eines Linearwälzlagers, welches eine Schmiervorrichtung nach dem Stand der Technik enthält;
- Figur 2: einen Schnitt gemäß Linie ll-ll der Figur 1;
- Figur 3: eine Figur 2 entsprechende Ansicht einer ersten Ausführungsform einer Schmierstoffleitung für eine erfindungsgemäße Schmiervorrichtung;
- Figur 4: eine Draufsicht auf die Schmierstoffleitung nach Figur 3;
- Figur 5: eine Seitenansicht mit teilweisem Schnitt der Schmierstoffleitung nach Figur 3;
- Figur 6: einen Schnitt gemäß Linie VI-VI der Figur 3;
- Figur 7: einen Schnitt gemäß Linie VII-VII der Figur 3;
- Figur 8: die Ansicht der Schmierstoffleitung gemäß Figur 3, wobei jedoch die zusätzlichen Dichtlippen elastisch verschwenkt dargestellt sind;
- Figur 9: eine Seitenansicht mit teilweisem Schnitt der Schmiervorrichtung nach Figur 8;
- Figur 10: eine Teilansicht einer zweiten Ausführungsform einer Schmierstoffleitung mit einem Umlenkkörper für eine erfindungsgemäße Schmiervorrichtung;
- Figur 11: einen Schnitt gemäß Linie XI-XI der Figur 10;
- Figur 12: einen Schnitt gemäß Linie XII-XII der Figur 10;
- Figur 13: einen Schnitt gemäß Linie XIII-XIII der Figur 10;
- Figur 14: einen Schnitt gemäß Linie XIV-XIV der Figur 10;
- Figur 15: die in Figur 10 dargestellte Schmierstoffleitung, jedoch ohne Umlenkkörper;
- Figur 16: einen Schnitt gemäß Linie XVI-XVI der Figur 15;
- Figur 17: einen Schnitt gemäß Linie XVII-XVII der Figur 16;
- Figur 18: einen Schnitt gemäß Linie XVIII-XVIII der Figur 16;
- Figur 19: einen Schnitt gemäß Linie XIX-XIX der Figur 16;
- Figur 20: die Teilansicht der Schmierstoffleitung gemäß Figur 10, wobei jedoch die zusätzliche Dichtlippe elastisch verschwenkt dargestellt ist;
- Figur 21: einen Schnitt gemäß Linie XXI-XXI der Figur 20.

### Ausführliche Beschreibung der Zeichnungen

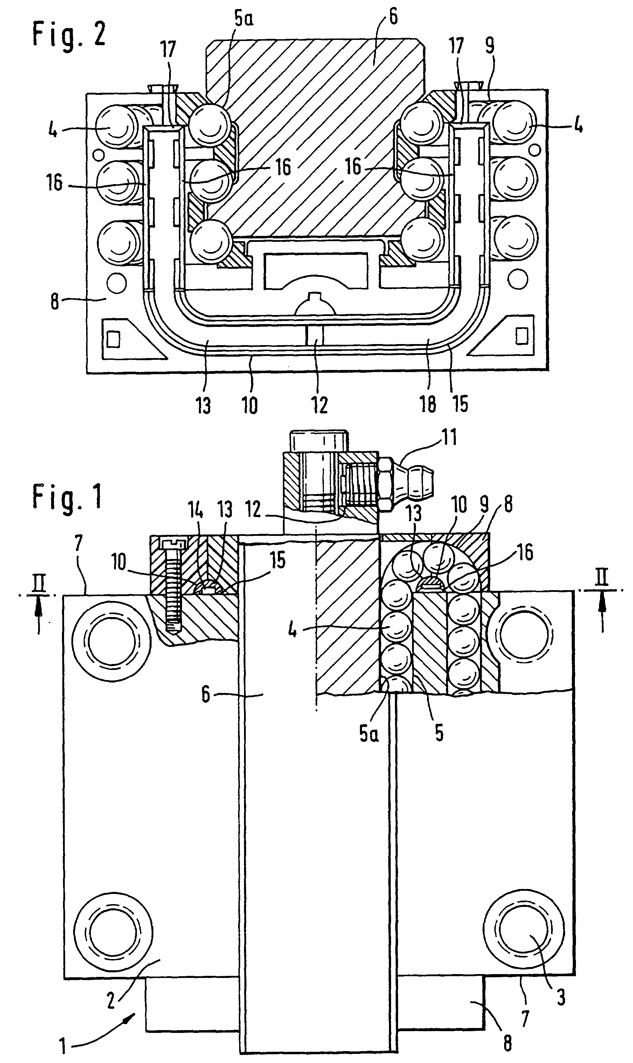

Das in den Figuren 1 und 2 dargestellte Wälzlager 1 enthält einen Tragkörper 2. An diesem können über Schraubverbindungen 3 weitere nicht dargestellte linear zu bewegende Bauteile befestigt werden. Der Tragkörper 2 wird über Paare von umlaufenden Wälzkörpern 4 längsverschieblich gelagert, die sich an Laufbahnen 5 des Tragkörpers 2 und an Laufbahnen 5a einer Führungsschiene 6 abstützen.

Der Tragkörper 2 ist an seinen Stirnseiten 7 durch je ein Kopfstück 8 aus Kunststoff verschlossen. Dieses verfügt jeweils über die Wälzkörper 4 umlenkende Bereiche 9. Wenigstens ein Kopfstück 8 ist mit einem Kanal 10 zur Zuführung von Schmierstoff von einem Schmiernippel 11 über eine Zusteuerleitung 12 zu den Wälzkörpern 4 versehen. In dem Kanal 10 wenigstens eines Kopfstücks 8 ist eine separate Schmierstoffleitung 13 eingelegt, die einen U-förmigen Querschnitt aufweist und mit ihrer Längsseite über doppeltelastische Dichtlippen 15 an der Stirnseite 7 des Tragkörpers 2 anliegt. Die Längsseite bildet eine radiale Öffnung 14. In einem Bereich von gewünschten Austrittsstellen für den Schmierstoff, nämlich im Bereich der Laufbahnen 5 und 5a für die Wälzkörper 4, ist die Schmierstoffleitung 13 mit einer einlippigen Dichtlippe 16 ausgestattet.

Aus Figur 2 ist erkennbar, daß die Schmierstoffleitung 13 an ihren axialen Enden 17 verschlossen ist. Über den Schmiernippel 11 und die Zusteuerleitung 12 wird Schmierstoff in die Schmierstoffleitung 13 gedrückt. Er verteilt sich in einem Hohlraum 18, in dem bei weiterer Zugabe von Schmierstoff ein Überdruck in der Schmierstoffleitung aufgebaut wird. Der Überdruck bewirkt ein Nachgeben der elastischen einlippigen Dichtlippe 16. Der Schmierstoff kann nun in den Bereichen von gewünschten Austrittsstellen in der Nähe der Wälzkörper 4 austreten, bis der Überdruck so weit vermindert ist, daß die Dichtlippe 16 sich wieder in ihre Schließstellung zurückbewegt. Dann ist der Druck des Schmierstoffs in der Schmierstoffleitung 13 so groß wie der Schmierstoffdruck auf der Seite der Wälzkörper 4.

Da das Wälzlager 1 allseitig abgedichtet ist, verbleibt der Schmierstoff in der Schmierstoffleitung 13, bis der nächste Schmierimpuls wieder für eine Druckerhöhung in der Schmierstoffleitung 13 sorgt und der Vorgang sich wiederholt. Die doppeltelastische Dichtlippe 15 kann auch an der Längsseite der Schmierstoffleitung 13 vollkommen umlaufen, so daß eine einlippige Dichtlippe 16 fehlt. Zur gezielten Zufuhr von Schmierstoff auf die Laufbahnen 5 und 5a des Wälzlagers 1 dienen in diesem Fall Schlitze, die beispielsweise achsparallel oder schräg zur Axiallinie der Schmierstoffleitung 13 in dieser angeordnet sein können.

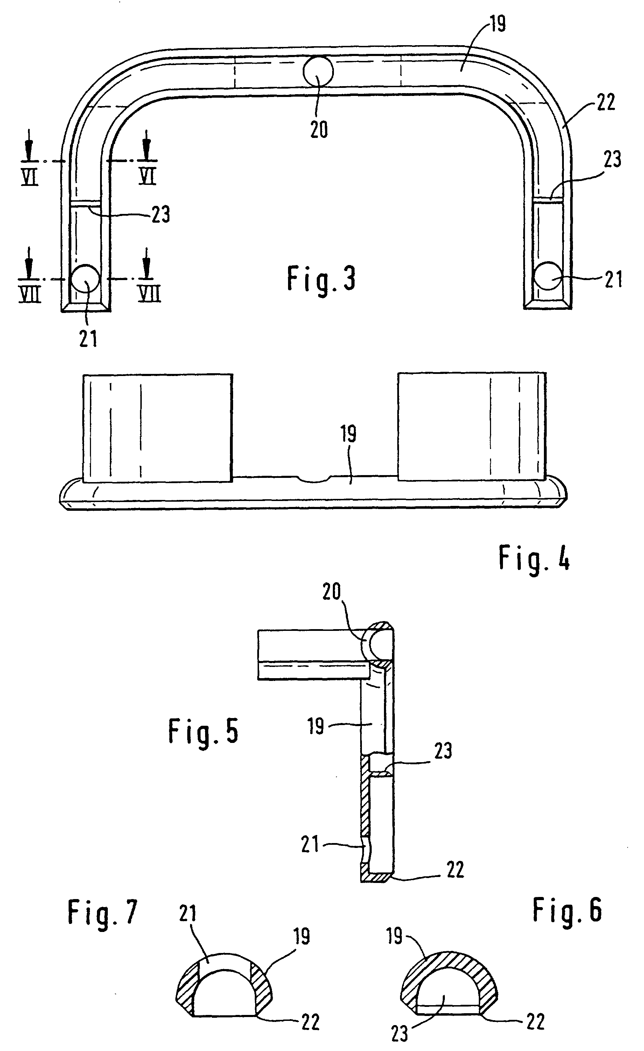

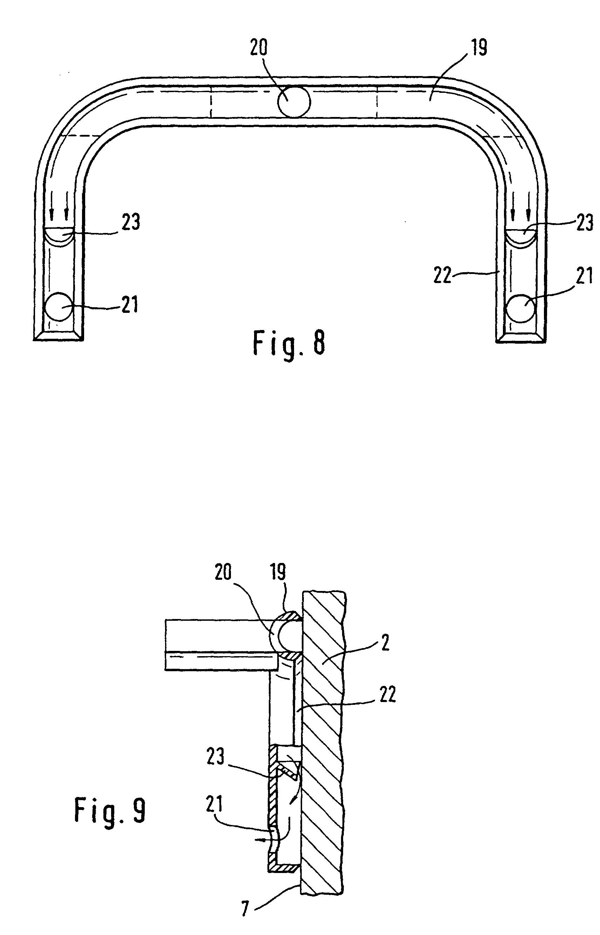

Eine Schmierstoffleitung 19 für eine erfindungsgemäße Schmiervorrichtung ist in den Figur 3 bis 9 dargestellt. Sie verläuft mit etwa halbkreisförmigem Querschnitt U-förmig, wobei in der Mitte des U-Steges eine radiale Eintrittsöffnung 20 und an den Enden der U-Schenkel radiale Austrittsöffnungen 21 ausgebildet sind. An der radial offenen Seite der Schmierstoffleitung 19 ist eine umlaufende Dichtlippe 22 ausgebildet. Mit dieser liegt die Schmierstoffleitung 19 an der Stirnseite 7 des Tragkörpers 2 dichtend an.

Schmierstoff gelangt beispielsweise von dem Schmiernippel 11 durch die Eintrittsöffnung 20 in die Schmierstoffleitung 19 und wird von dort zu den Austrittsöffnungen 21 geleitet, wenn ein Schmierimpuls erfolgt. Damit über die Austrittsöffnungen 21 zu den Wälzkörpern 4 geförderter Schmierstoff nicht zurückfließen kann, befindet sich in dieser Schmierstoffleitung 19 jeweils zwischen der Eintrittsöffnung 20 und einer Austrittsöffnung 21 eine zusätzliche Dichtlippe 23 in der Form einer Wand, die den inneren Querschnitt der Schmierstoffleitung 19 ausfüllt. Diese zusätzliche Dichtlippe 23 ist mit ihrem von dem Tragkörper 2 entfernten Randbereich an der Schmierstoffleitung 19 befestigt und kann im übrigen elastisch verschwenkt werden, so daß sie nach dem Ausschwenken mit der Stirnseite 7 des Tragkörpers 2 einen Spalt bildet, durch den Schmierstoff hindurch in den Bereich der Austrittsöffnung 21 gelangen kann.

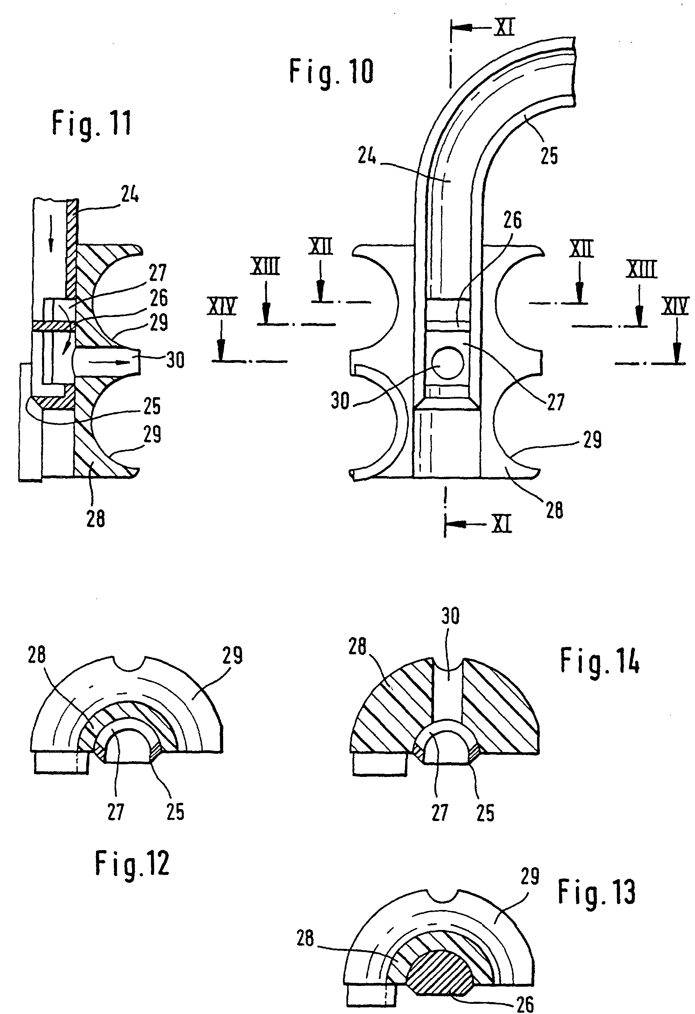

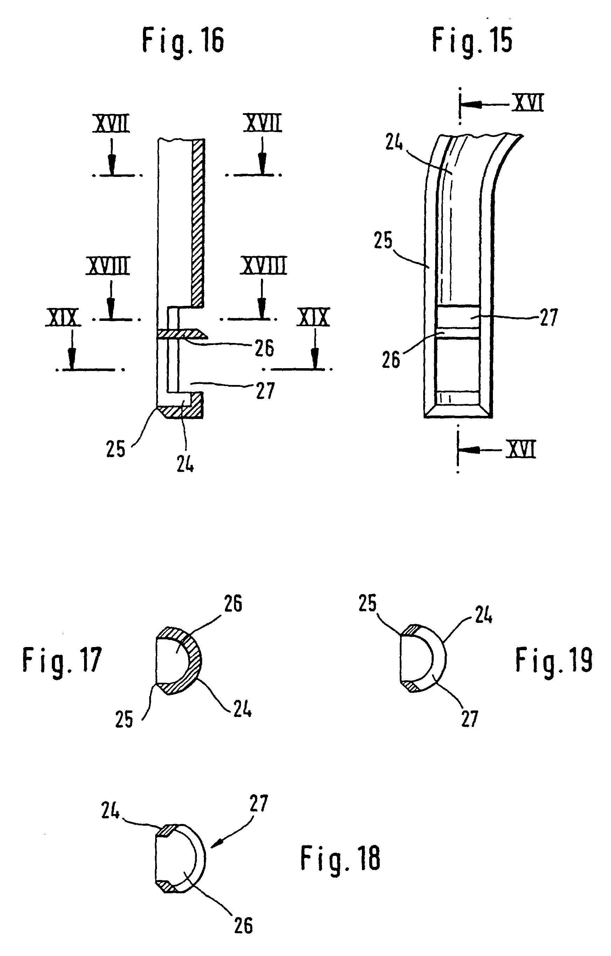

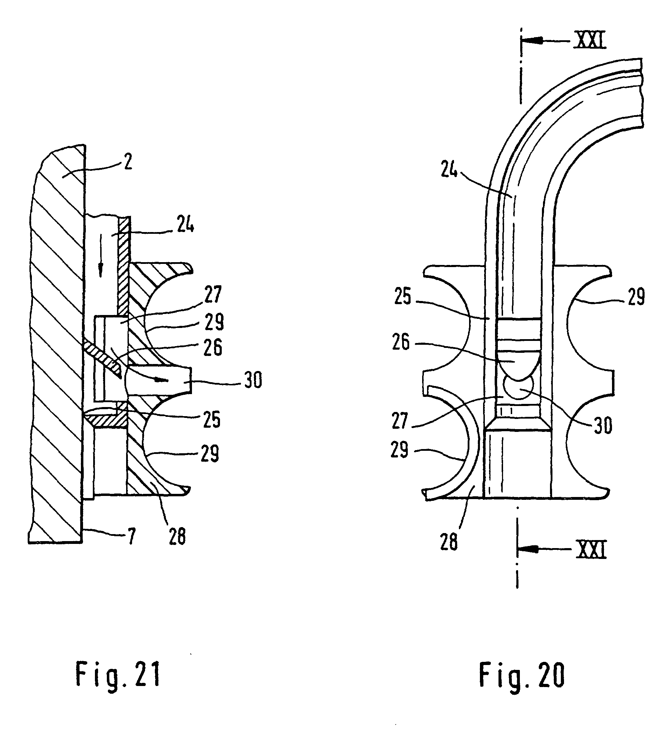

In den Figuren 10 bis 21 ist eine weitere Ausführung einer Schmierstoffleitung 24 für eine erfindungsgemäße Schmiervorrichtung dargestellt. Sie hat ebenso, wie die Schmierstoffleitung 19 eine U-förmige Gestalt mit etwa halbkreisförmigem Querschnitt und eine umlaufende Dichtlippe 25, mit welcher sie an der Stirnseite 7 des Tragkörpers 2 dichtend anliegt. Zusätzliche Dichtlippen 26, die jeweils die Form einer den inneren Querschnitt der Schmierstoffleitung 24 ausfüllenden Wand haben, befinden sich hier im Bereich der Austrittsöffnungen 27 an den Enden der U-Schenkel der Schmierstoffleitung 24. Eine solche zusätzliche Dichtlippe 26 ist hier so in der Schmierstoffleitung 24 mit einem Randbereich befestigt, daß sie dort immer an der Stirnseite 7 des Tragkörpers 2 anliegt und mit ihren von dem Tragkörper 2 abgewandten Randbereichen aus der Verschlußstellung elastisch herausgeschwenkt werden kann.

Die zusätzliche Dichtlippe 26 liegt mit ihrem schwenkbaren Ende an einem Umlenkkörper 28 an, der die Schmierstoffleitung 24 im Bereich von deren radialer Austrittsöffnung 27 umgibt und auf seiner Außenseite zwei Laufbahnen 29 für die hier umzulenkenden Wälzkörper 4 aufweist. Die zusätzliche Dichtlippe 26 ragt in der Verschlußstellung durch die Austrittsöffnung 27 hindurch und liegt an dem Umlenkkörper 28 dichtend an. Sobald ein Schmierimpuls auftritt, wird die zusätzliche Dichtlippe 26 aus ihrer Verschlußlage elastisch herausgeschwenkt und bildet mit dem Umlenkkörper 28 einen Durchtrittsspalt für den Schmierstoff. Dieser gelangt dann durch einen zwischen zwei Laufbahnen 29 des Umlenkkörpers 28 angeordneten Schmierkanal 30 zu den Wälzkörpern 4 im Umlenkbereich. Wenn der Schmierimpuls beendet ist, federt die zusätzliche Dichtlippe 26 zurück und legt sich wieder an dem Umlenkkörper 28 dichtend an. Dadurch wird ein Leerlaufen der Schmierstoffleitung verhindert, so daß der Schmierstoff in der Schmierstoffleitung verbleibt, bis der nächste Schmierimpuls wieder für eine Druckerhöhung in der Schmierstoffleitung sorgt und sich der Vorgang wiederholt.

### Bezugszahlenliste

- 1: Wälzlager
- 2: Tragkörper
- 3: Schraubverbindung
- 4: Wälzkörper
- 5: Laufbahn
- 5a: Laufbahn
- 6: Führungsschiene
- 7: Stirnseite
- 8: Kopfstück
- 9: Umlenkbereich
- 10: Schmierkanal
- 11: Schmiernippel
- 12: Zusteuerleitung
- 13: Schmierstoffleitung
- 14: Öffnung
- 15: doppeltelastische Dichtlippe
- 16: einlippige Dichtlippe
- 17: axiales Ende
- 18: Hohlraum
- 19: Schmierstoffleitung
- 20: Eintrittsöffnung 21 Austrittsöffnung
- 22: umlaufende Dichtlippe
- 23: zusätzliche Dichtlippe
- 24: Schmierstoffleitung
- 25: umlaufende Dichtlippe
- 26: zusätzliche Dichtlippe
- 27: Austrittsöffnung
- 28: Umlenkkörper
- 29: Laufbahn
- 30: Schmierkanal

## Patentansprüche

1. Schmiervorrichtung für ein Linearwälzlager, welches eine Führungsschiene (6), einen Tragkörper (2) und Wälzkörperumläufe enthält, deren tragende Wälzkörper (4) zur verschieblichen Lagerung des Tragkörpers (2) längs der Führungsschiene (6) vorgesehen sind, wobei an den in die Verschiebungsrichtungen weisenden Stirnseiten (7) des Tragkörpers (2) Kopfstücke (8) für die Umlenkung der Wälzkörper (4) in Rücklaufkanäle befestigt sind und in wenigstens einem der Kopfstücke (8) ein Schmierkanal (10) mit einer eingesetzten Schmierstoffleitung (19, 24) angeordnet ist, die mit einer elastischen umlaufenden Dichtlippe (22, 25) an einer Stirnseite (7) des Tragkörpers (2) anliegt und mit einer Eintrittsöffnung (20) sowie mehreren zu den Wälzkörpern (4) im Umlenkbereich (9) führenden Austrittsöffnungen (21, 27) für Schmierstoff versehen ist, **dadurch gekennzeichnet, daß** in der Schmierstoffleitung (19, 24) jeweils zwischen der Eintrittsöffnung (20) und einer Austrittsöffnung (21, 27) eine in einer Querschnittsebene sich erstreckende und aus dieser ausschwenkbare, als zusätzliche Dichtlippe (23, 26) wirkende elastische Wand angeordnet ist.

2. Schmiervorrichtung nach Anspruch 1, **dadurch gekennzeichnet, daß** die zusätzliche Dichtlippe (23) jeweils mit ihrem von dem Tragkörper (2) abgewandten Randbereich in der Schmierstoffleitung (19) befestigt ist und mit ihrem dem Tragkörper (2) benachbarten Randbereich an der Stirnseite (7) des Tragkörpers (2) abschwenkbar anliegt (Figur 9).

3. Schmiervorrichtung nach Anspruch 1, **dadurch gekennzeichnet, daß** die Schmierstoffleitung (24) in den Bereichen ihrer Austrittsöffnungen (27) von Umlenkkörpern (28) umgeben ist, an welchen innere Laufbahnen (29) für die umzulenkenden Wälzkörper (4) ausgebildet sind.

4. Schmiervorrichtung nach Anspruch 3, **dadurch gekennzeichnet, daß** die zusätzliche Dichtlippe (26) jeweils mit ihrem dem Tragkörper (2) benachbarten Randbereich in der Schmierstoffleitung (24) befestigt ist und mit ihrem von dem Tragkörper (2) abgewandten Randbereich durch die Austrittsöffnung (27) der Schmierstoffleitung (24) hindurch verlaufend an dem Umlenkkörper (28) abschwenkbar anliegt (Figur 21).

5. Schmiervorrichtung nach Anspruch 3, **dadurch gekennzeichnet, daß** an jedem Umlenkkörper (28) zwischen zwei benachbarten Laufbahnen (29) ein Schmierkanal (30) ausgebildet ist, durch welchen die Austrittsöffnung (27) der Schmierstoffleitung (24) mit den im Umlenkbereich (9) befindlichen Wälzkörpern (4) verbunden ist.

## Claims

1. A lubrication apparatus for a linear roller bearing which contains a guide rail (6), a supporting body (2) and roller body tracks, the supporting roller bodies (4) of which are provided for moveable mounting of the supporting body (2) along the guide rail (6), wherein head pieces (8) are attached to the face sides (7) which point in the direction of movement for return of the roller bodies (4) in return channels and a lubrication channel (10) with an inset lubricant supply line (19, 24) is disposed in at least one of the head pieces (8) and lies against a face side (7) of the supporting body (2) with an elastic peripheral sealing lip (22, 25), and is provided with an inlet opening (20) and a plurality of discharge openings (21, 27) for lubricant, leading to the roller bodies (4) in the return area (9), **characterised in that** in each case, an elastic wall which serves as an additional sealing lip (23, 26), extending in one cross-sectional plane and being pivotable out of this plane, is disposed between the inlet opening (20) and a discharge opening (21, 27).

2. A lubrication apparatus according to claim 1, **characterised in that** the additional sealing lip (23) is attached, in a manner which allows it to be pivoted, to the lubricant supply line (19) and lies against the face side (7) of the supporting body (2) in each case with its edge portion remote from the supporting body (2) (Figure 9).

3. A lubrication apparatus according to claim 1, **characterised in that** the lubricant supply line (24) is surrounded in the area of its discharge openings (27) by return bodies (28), on the inside of which tracks (29) are formed for the roller bodies (4) which are to be returned.

4. A lubrication apparatus according to claim 3, **characterised in that** in each case the additional sealing lip (26) is attached to the lubricant supply line (24) with its edge portion which is adjacent to the supporting body (2), and lies with its edge portion remote from the supporting body (2), extending through the discharge opening (27) of the lubricant supply line (24) against the return body (28) in a manner which allows it to be moved aside (Figure 21).

5. A lubrication apparatus according to claim 3, **characterised in that** a lubricant channel (30) is configured on each return body (28) between two adjacent tracks (29), via which the discharge opening (27) of the lubricant supply line (24) is connected with the roller bodies (4) disposed in the return area (9).

## Revendications

1. Dispositif de lubrification d'un palier à roulement linéaire comprenant un rail de guidage (6), un support (2) et des chemins d'organes de roulement dont les organes de roulement (4), porteurs, reçoivent de manière coulissante le support (2) le long du rail de guidage (6), avec
dans les directions de déplacement, les faces frontales (7) de l'organe de support (2) qui comportent des pièces d'extrémité (8) pour renvoyer les organes de roulement (4) dans les canaux de circulation, et avec dans au moins une pièce d'extrémité (8), un canal de lubrification (10) qui loge une conduite de lubrifiant (19, 24) dont la lèvre d'étanchéité périphérique élastique (22, 25) est appliquée contre une face frontale (7) du support (2) et un orifice d'entrée (20) ainsi que plusieurs orifices de sortie (21, 27) de lubrifiant conduisant vers les organes de roulement (4) de la zone de renvoi (9),
**caractérisé en ce que**
la conduite de lubrifiant (19, 24) comporte chaque fois entre l'orifice d'entrée (20) et un orifice de sortie (21, 27), une lèvre d'étanchéité (23, 26) supplémentaire, s'étendant dans un plan de section et pouvant sortir de cette position par basculement, cette lèvre fonctionnant comme une cloison élastique.

2. Dispositif de lubrification selon la revendication 1,
**caractérisé en ce que**
la lèvre d'étanchéité supplémentaire (23) est fixée avec sa zone d'extrémité opposée à l'organe de support (2) dans la conduite de lubrifiant (19) et par sa zone de bord voisine du support (2), elle s'appuie de façon à pouvoir basculer, contre la face frontale (7) du support (2) (figure 9).

3. Dispositif de lubrification selon la revendication 1,
**caractérisé en ce que**
la conduite de lubrifiant (24) est entourée par les organes de renvoi (28) dans les zones de ses orifices de sortie (27) au niveau desquels sont réalisés les chemins de circulation internes (29) des organes de roulement (4) à renvoyer.

4. Dispositif de lubrification selon la revendication 3,
**caractérisé en ce que**
la lèvre d'étanchéité supplémentaire (26) est fixée avec sa zone de bord voisine du support (2) dans la conduite de lubrifiant (24) et par sa zone de bord non tournée vers le support (2), elle passe par l'orifice de sortie (27) de la conduite de lubrifiant (24) en s'appliquant de manière basculante contre l'organe de renvoi (28) (figure 21).

5. Dispositif de lubrification selon la revendication 3,
**caractérisé en ce qu'**
un canal de lubrifiant (30) est réalisé au niveau de chaque organe de renvoi (28) entre deux chemins de circulation (29) voisins, et ce canal relie l'orifice de sortie (27) de la conduite de lubrifiant (24) aux organes de roulement (4) qui se trouvent dans la zone de renvoi (9).
